# EUROPÄISCHE PATENTANMELDUNG

(11) **EP 1 881 183 A1**
(43) Veröffentlichungstag der Anmeldung: **23.01.2008**
(21) Anmeldenummer: 06014955.6
(22) Anmeldetag: 18.07.2006
(51) Int. Cl.: F02C 7/266

(54) **Vorrichtung zum verbesserten Zünden eines Brennstoffs**

(71) Anmelder: SIEMENS AKTIENGESELLSCHAFT, 80333 München (DE)
(72) Erfinder: Braun, Gilbert, 52134 Herzogenrath (DE); Kluge, Andre, 48249 Dülmen (DE); Pfeiffer, Elmar, 52525 Heinsberg (DE); Schmitz, Udo, 45473 Mühlheim an der Ruhr (DE); Tüschen, Sabine, 46149 Oberhausen (DE)

(57) **Zusammenfassung**

Die Erfindung betrifft eine Vorrichtung zum verbesserten Zünden eines Brennstoff/Luft Gemisches (8) umfassend eines Zünders mit mindestens einer Elektrode und einer Zündelektrode (6), wobei bei Betrieb an wenigstens einem Teil der Zündelektrode (6) durch Zündspannung ein Zündfunken vorgesehen ist, wobei zumindest ein Teil der Elektrode flexibel ausgeführt ist.

## Beschreibung

Die Erfindung betrifft eine Vorrichtung zum verbesserten Zünden eines Brennstoff/Luft Gemisches umfassend eines Zünders mit mindestens einer Elektrode und einer Zündelektrode insbesondere für eine Brennkammer in einer Gasturbine.

Ein Zünder für eine Brennkammer einer Gasturbine ist mit zwei entgegengesetzt geladenen Elektroden ausgestaltet. Diese sind derart voneinander beanstandet dass an den Zündelektroden der Elektroden ein definierter Spalt ist.

Der Zünder hat die Aufgabe, den Brennstoff bzw. das Brennstoff/Luft Gemisch des Gasbrenners zu zünden. Die Zündelektrode des Zünders ist daher an der Gasaustrittsöffnung angeordnet und entzündet das dort strömende Brenngas-LuftGemisch. Der Zündfunke wird durch die Zündspannung zwischen den zwei Zündelektroden erzeugt und steht während der gesamten Zünddauer an. Für einen optimalen Zündfunken ist die genaue Einhaltung des vorgeschriebenen Abstandes zwischen den beiden Zündelektroden erforderlich.

Dazu wurde der Zünder bisher über eine Schelle festgehalten. Die Festhaltung der Elektroden erfolgt über eine Verschraubung mit einem Flansch (Festlager) sowie der Schelle, die als axialer Schiebesitz wirkt. Hier treten jedoch Brüche der Elektrode kurz hinter dem Flansch und an einer nachgeschalteten Hülse um die Elektroden auf.

Ein weiterer Nachteil der bestehenden Konstruktion ist die Empfindlichkeit gegen Stöße beim Ein- und Ausbau des Brenners, da beispielsweise die an zwei Stellen in eine Keramik eingeklebte Elektrode bzw. der Elektronenführenden Kabeldrähten nicht direkt am Brenner anliegt. Es kann schnell zum Verbiegen und somit zum Bruch mit Folgeschäden kommen.
Die Zünderproblematik stellt daher derzeit eine technische Herausforderung im Bereich der Gasturbine dar.

Die Aufgabe der Erfindung ist daher die Angabe einer Vorrichtung zum verbesserten Zünden eines Brennstoff/Luft Gemisches unter Vermeidung der oben genannten Nachteile.

Die Aufgabe wird erfindungsgemäß gelöst durch eine Vorrichtung zum verbesserten Zünden eines Brennstoff/Luft Gemisches umfassend eines Zünders mit mindestens einer Elektrode und einer Zündelektrode, wobei bei Betrieb an wenigstens einem Teil der Zündelektrode durch Zündspannung ein Zündfunken vorgesehen ist und wobei zumindest ein Teil der Elektrode flexibel ausgeführt ist.

Die Erfindung geht von der Erkenntnis aus, dass die Ursache dieses Problems im Wesentlichen in der Schelle liegt, welche als radiale Festhaltung der Elektrode dienen soll. Die Verschiebbarkeit der Elektrode in der Schelle ist von dem Anzug der fixierenden Schraube abhängig. Ist die Schraube zu fest angezogen, ist die Elektrode über zwei Festlager befestigt. Die aus der Umgebungstemperatur von 420°C resultierende Wärmedehnung führt zu kritischen Wärmespannungen an der Elektrode und zum Bruch. Über die Schellenkonstruktion kann daher keine hinreichende Ausdehnung gewährleistet werden. Um die Problematik der Festhaltung der Elektrode zu umgehen, wird erfindungsgemäß anstatt einer starren Elektrode die Elektrode flexibel ausgeführt. Ein Bruch in Folge der Wärmedehnung in axiale Richtung wird damit vermieden. Durch die erfindungsgemäße Vorrichtung wird zudem damit eine axiale Verschiebung des Zünders verhindert. Weiterhin werden kritische Spannungen der Elektrode und damit Brüche vermieden. Die Erfindung ermöglicht zudem eine vereinfachte Montage sowie eine vereinfachte Fertigung.

In bevorzugter Ausgestaltung ist der flexible Teil der Elektrode ein flexibles Kabel. Dieses kann aus ein oder mehreren Kabeldrähten, Litzen, oder Fasern sowie bedarfsweise einem Kabelmantel bestehen. Dieses ist vorteilhafterweise elektrisch isoliert.

Bevorzugt ist zumindest der flexible Teil der Elektrode in einem Rohr angebracht. Dieses ist vorteilhafterweise als Metallrohr insbesondere als Stahlrohr ausgeführt. Dies bewirkt einen Schutz gegen äußere Einflüsse z.B. einen Stoß beim Einbau bei dem flexiblen Teil der Elektrode z.B. dem Kabel. Das Stahlrohr wird direkt am Brenner befestigt. Eine wärmebewegliche Festhaltung ist somit nicht mehr erforderlich. Weiterhin wird vorteilhafterweise ein Bruch in Folge der Wärmedehnung in axialer Richtung verhindert.

Bevorzugt weist das Rohr einen Ansatz in Richtung der Zündelektrode auf. Mit diesem wird durch beispielsweise eine Verschweißung mit einem dafür vorgesehenen Gegenpart die notwendige Dichtigkeit erzielt.

In bevorzugter Ausgestaltung ist zumindest zwischen dem flexiblen Teil der Elektrode und dem Rohr eine elektrische Isolierung angebracht. Diese verhindert den direkten Kontakt des Elektronen führenden flexiblen Teils der Elektroden beispielsweise den Drähten des Kabels und dem Rohr. Diese besteht bevorzugt zumindest teilweise aus Glasseide.

Vorteilhafterweise ist der Zündelektrode ein Übergangsstück zumindest teilweise vorgeschaltet. Dieser kann neben einem Teil der Zündelektrode auch einen Teil des flexiblen Elektrodenteils umfassen. Das Übergangsstück ermöglicht einen direkten Kontakt zwischen dem flexiblen Teil der Elektroden beispielsweise dem Kabel und der Zündelektrode.

Bevorzugt ist das Übergangsstück elektrisch isolierend. In vorteilhafter Ausgestaltung ist das Übergangsstück weiterhin hitzebeständig. Bevorzugt ist das Übergangsstück zudem wasserdicht. Das Übergangsstück besteht dabei bevorzugt aus einer Keramik oder aus keramischem Grundmaterial. Dies kann beispielsweise eine Feuerfestkeramik sein. Damit wird eine zuverlässigere Zündung auch unter feuchter Umgebungsbedingung z.B. nach Verdichterwaschen erzielt.

In vorteilhafter Ausgestaltung weist das Übergangsstück eine Befestigungsvorrichtung auf. Diese Befestigungsvorrichtung ist anschließend am Brenner angebracht. Somit ist das Übergangsstück am Brenner befestigt. Diese Befestigungsvorrichtung kann sich auch auf die in dem Übergangsstück befindliche Zündelektrode und/oder auf den in dem Übergangsstück befindlichen, flexiblen Elektrodenteil erstrecken. Mit einer entsprechenden Hilfsvorrichtung kann die richtige Anordnung und Positionierung der Elektrode für die Zündung bei der Fertigung justiert werden. Die Dichtigkeit wird über die Verklebung der Schrauben und teilweise der Zündelektrode sowie der Elektrode mit beispielsweise Keramikkleber erreicht. Damit wird eine gute Einstellbarkeit des Zündspaltes erzielt sowie radiale und tangentiale Bewegungen, beispielsweise Schwingungen vermieden. Auch wird die Gefahr vor Transportschäden der Elektrode verringert.

Bevorzugt weist das Übergangsstück einen Metallring auf. Dieser ist vorteilhafter als Gegenpart zu dem Ansatz des Rohrs ausgestaltet. Über eine Verschweißung des Ansatzes und des Metallrings wird nun die notwendige Dichtigkeit erzielt.

In vorteilhafter Ausgestaltung sind zumindest ein Teil der flexiblen Elektrode und wenigstens ein Teil der Zündelektrode in einer gemeinsamen Metallhülse angeordnet. Dies kann dergestalt sein, dass die Enden in einer gemeinsamen Metallhülse auf Kontakt angeordnet sind. Durch das gemeinsame Einklemmen von wenigstens einem Teil der Zündelektrode und wenigstens einem Teil des flexiblen Elektrodenteils beispielsweise der Kabeldrähte in der Metallhülse ist der elektrische Stromübergang gewährleistet.

Die notwendige elektrische Isolierung kann im Bereich des Überganges über die Keramik erfolgen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Zeichnungen.

Darin zeigt in vereinfachter und nicht maßstäblicher Darstellung:
FIG 1 einen Querschnitt einer Vorrichtung zum Zünden nach dem Stand der Technik,
FIG 2 eine Draufsicht einer Vorrichtung zum Zünden nach dem Stand der Technik,
FIG 3 eine Außenansicht einer Vorrichtung zum Zünden gemäß der Erfindung,
FIG 4 einen Querschnitt einer Vorrichtung zum Zünden gemäß der Erfindung,
FIG 5 einen Querschnitt einer Vorrichtung zum Zünden gemäß der Erfindung,
FIG 6 eine Gegenüberstellung der erfindungsgemäßen Vorrichtung und der Vorrichtung nach dem Stand der Technik.

Gleiche Teile sind in allen Figuren mit denselben Bezugszeichen versehen.

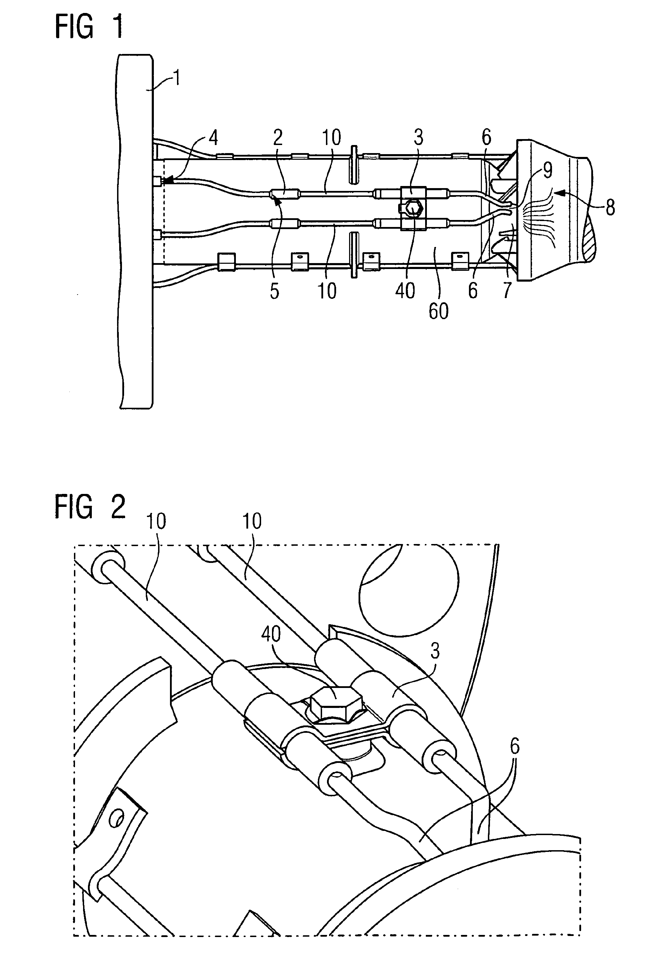

FIG 1 und 2 zeigen einen Zünder mit Elektroden 10 und einer Zündelektrode nach dem Stand der Technik. Der Zünder kann dabei in einem Gehäuse 60 angeordnet sein. Der Zünder wird über eine Schelle 3 festgehalten. Die Zünderproblematik resultiert hier jedoch unter anderem durch vermehrtes Auftreten von Schäden an der Elektrode 10. Es treten Brüche 4,5 der Elektrode 10 kurz hinter dem Flansch 1 und an der Hülse 2 auf. Die Festhaltung der Elektroden 10 erfolgt über eine Verschraubung mit dem Flansch 1 (Festlager) sowie die Schelle 3, die als axialer Schiebesitz wirken soll. Die Verschiebbarkeit der Elektrode in der Schelle ist unter anderem von dem Anzug der fixierenden Schraube 40 abhängig. Ist die Schraube 40 zu fest angezogen, ist die Elektrode über zwei Festlager befestigt. Die aus der Umgebungstemperatur von 420°C resultierende Wärmedehnung führt zu kritischen Wärmespannungen an der Elektrode 10 und zum Bruch 4,5. Daher ist auch der optimale Zündspalt 9 nicht immer gewährleistet.

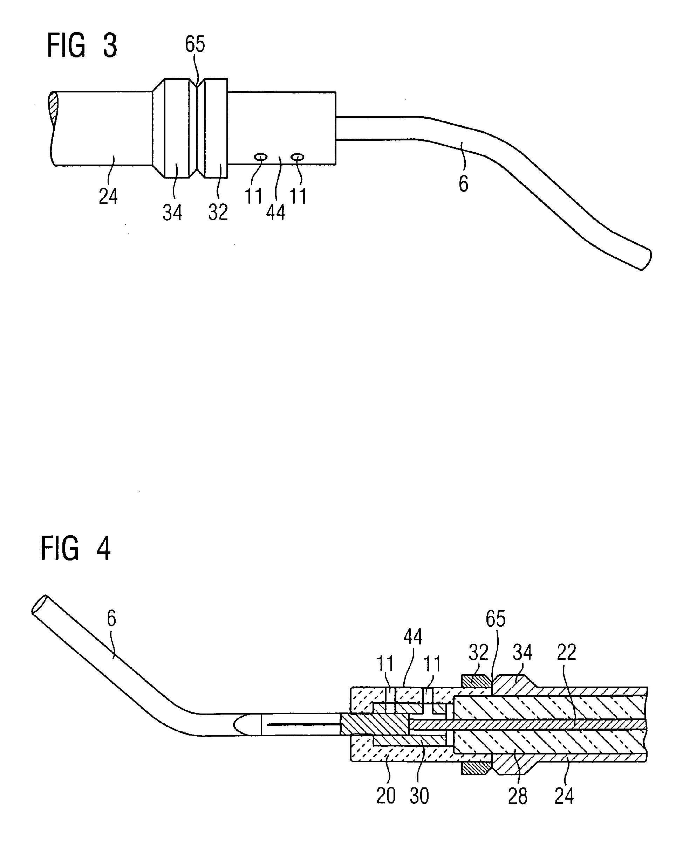

FIG 3-5 zeigen die verbesserte Vorrichtung zum Zünden eines Brenngases bzw. Brenngas/Luft Gemisches 8 in einer Gasturbine gemäß der Erfindung. Als eine der Ursachen der Probleme im Stand der Technik wurde die Schelle 3 erkannt, die auch als radiale Festhaltung der Elektrode 10 nach dem Stand der Technik dienen soll.
Um die Problematik der Festhaltung der Elektrode 10 zu lösen, ist erfindungsgemäß anstatt einer starren Elektrode 10 ein flexibles, elektrisch isoliertes Kabel 22 eingesetzt. Dieses Kabel 22 wird als Schutz gegen äußere Einflüsse (z.B. Stoß beim Einbau) in einem Metallrohr insbesondere an einem Stahlrohr 24 geführt. Das Stahlrohr 24 wird an einem Ende direkt am Brenner befestigt. Eine wärmebewegliche Festhaltung ist somit nicht mehr erforderlich. Ein Bruch in Folge der Wärmedehnung in axiale Richtung wird vermieden. Am anderen Ende des Stahlrohrs 24 wird ein Ansatz 34 insbesondere ein metallischer Ansatz aufgebracht.

Ein Übergangsstück 44 ermöglicht einen direkten Kontakt zwischen Kabel 22 und Zündelektrode 6 und wird z.B. über eine Keramik 20 realisiert. Die Keramikschicht kann dabei teilweise auch einen Teil des Kabels bzw. der Kabeldrähte selber und dessen Isolierung aus Glasseide umfassen. Das Übergangsstück 44 ist elektrisch isolierend, hitzebeständig sowie wasserdicht. Das Übergangsstück 44 umfasst eine Metallhülse 30. Durch das Einklemmen von Zündelektrode 6 und dem Kabels bzw. beispielsweise den Kabeldrähten in der Metallhülse 30 wird der elektrische Stromübergang gewährleistet. Die Fixierung von Zündelektrode 6 und dem des Kabels 22 beispielsweise den Kabeldrähten in der Metallhülse 30 erfolgt über Schrauben 11. Mit einer entsprechenden Hilfsvorrichtung kann die richtige Anordnung und Positionierung der Elektroden sowie der Zündelektroden 6 für die Zündung bei der Fertigung justiert werden.

Als Metallhülse 30 selber kann beispielsweise eine Lüsterklemme verwendet werden. Die notwendige elektrische Isolierung erfolgt im Bereich des Überganges 44 über die Keramik 20; im Bereich des Rohres 24 über Glasseide 28. Weiterhin umfasst das Übergangsstück 44 einen Metallring 32, der neben dem Ansatz 34 des Rohres 24 angeordnet ist. Die Dichtigkeit wird über die Verklebung der Schrauben 11, der Zündelektrode 6 und des Metallringes mit einem Keramikkleber erreicht. Zur gezielten Befestigung des Übergangsstücks 44 mit dem Rohr 24 ist der Ansatz 34 des Rohres 24 und der Metallring 32 auf dem Übergangsstück miteinander verschweißt. Dies dient auch ebenfalls zur notwenigen Dichtigkeit. Um eine bessere Verschweißung zu erhalten ist am Ansatz 34 und am Metallring 32 eine Kerbe 65 angebracht. Diese dient als Schweißvorbereitung und vereinfacht die Fertigung.

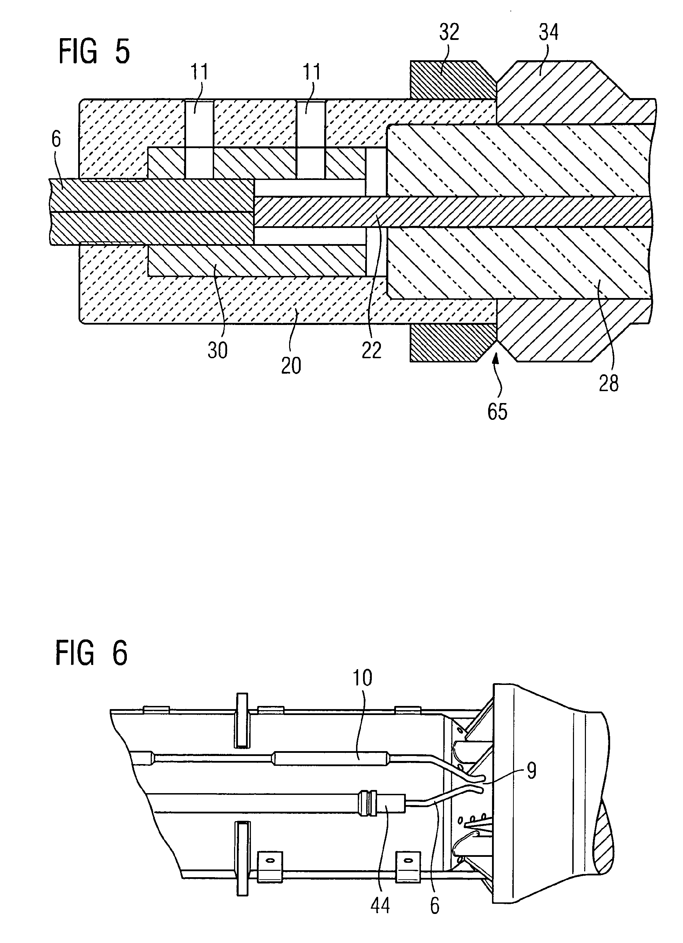

FIG 6 zeigt eine Elektrode 10 nach dem Stand der Technik und eine erfindungsgemäße Elektrode.

Die Vorteile der erfindungsgemäßen Vorrichtung liegen in der Verhinderung der axialen Verschiebung. Weiterhin hat die Erfindung den Vorteil dass kritischer Spannungen der Elektrode und damit Brüche vermieden werden. Damit wird die Lebensdauer erhöht. Zudem können Kosten durch Austausch und damit Abschalten der Turbine vermieden werden.

Ein zusätzlicher Vorteil ergibt sich aus der guten Einstellbarkeit des Zündspaltes. Ebenso werden radiale und tangentiale Bewegungen (Schwingungen) vermieden.
Die Erfindung hat den Vorteil der vereinfachten Montage und vereinfachten Fertigung.

Ein weiterer Vorzug ergibt sich aus der Verringerung der Gefahr vor Transportschäden der Elektroden. Auch ist eine zuverlässigere Zündung unter feuchter Umgebungsbedingung z.B. nach Verdichterwaschen möglich.

## Patentansprüche

1. Vorrichtung zum verbesserten Zünden eines Brennstoff/Luft Gemisches (8) umfassend eines Zünders mit mindestens einer Elektrode und einer Zündelektrode (6), wobei bei Betrieb an wenigstens einem Teil der Zündelektrode (6) durch Zündspannung ein Zündfunken vorgesehen ist,
**dadurch gekennzeichnet, dass** zumindest ein Teil der Elektrode flexibel ausgeführt ist.

2. Vorrichtung zum verbesserten Zünden eines Brennstoff/Luft Gemisches (8) nach Anspruch 1,
**dadurch gekennzeichnet, dass** der flexible Teil der Elektrode ein flexibles Kabel (22) ist.

3. Vorrichtung zum verbesserten Zünden eines Brennstoff/Luft Gemisches (8) nach einem der Ansprüche 1 - 2,
**dadurch gekennzeichnet, dass** zumindest der flexible Teil der Elektrode in einem Rohr angebracht ist.

4. Vorrichtung zum verbesserten Zünden eines Brennstoff/Luft Gemisches (8) nach Anspruch 3,
**dadurch gekennzeichnet, dass** das Rohr ein Metallrohr insbesondere ein Stahlrohr (34) ist.

5. Vorrichtung zum verbesserten Zünden eines Brennstoff/Luft Gemisches (8) nach einem der Ansprüche 3 - 4,
**dadurch gekennzeichnet, dass** das Rohr in Richtung Zündelektrode (6) einen Ansatz (34) aufweist.

6. Vorrichtung zum verbesserten Zünden eines Brennstoff/Luft Gemisches (8) nach einem der Ansprüche 3 - 5,
**dadurch gekennzeichnet, dass** zumindest zwischen dem flexiblen Teil der Elektrode und dem Rohr eine elektrische Isolierung angebracht ist.

7. Vorrichtung zum verbesserten Zünden eines Brennstoff/Luft Gemisches (8) nach Anspruch 6,
**dadurch gekennzeichnet, dass** die elektrische Isolierung zumindest teilweise aus Glasseide (28) besteht.

8. Vorrichtung zum verbesserten Zünden eines Brennstoff/Luft Gemisches (8) nach einem der vorhergehenden Ansprüche,
**dadurch gekennzeichnet, dass** der Zündelektrode (6) ein Übergangsstück (44) zumindest teilweise vorgeschaltet ist.

9. Vorrichtung zum verbesserten Zünden eines Brennstoff/Luft Gemisches (8) nach Anspruch 8,
**dadurch gekennzeichnet, dass** das Übergangsstück (44) elektrisch isolierend ist.

10. Vorrichtung zum verbesserten Zünden eines Brennstoff/Luft Gemisches (8) nach einem der Ansprüche 8 - 9,
**dadurch gekennzeichnet, dass** das Übergangsstück (44) hitzebeständig ist.

11. Vorrichtung zum verbesserten Zünden eines Brennstoff/Luft Gemisches (8) nach einem der Ansprüche 8 - 10,
**dadurch gekennzeichnet, dass** das Übergangsstück (44) wasserdicht ist.

12. Vorrichtung zum verbesserten Zünden eines Brennstoff/Luft Gemisches (8) nach einem der Ansprüche 8 - 11,
**dadurch gekennzeichnet, dass** das Übergangsstück (44) aus einer Keramik (20) oder aus keramischen Grundmaterial besteht.

13. Vorrichtung zum verbesserten Zünden eines Brennstoff/Luft Gemisches (8) nach einem der Ansprüche 8 - 12,
**dadurch gekennzeichnet, dass** das Übergangsstück (44) eine Befestigungsvorrichtung aufweist.

14. Vorrichtung zum verbesserten Zünden eines Brennstoff/Luft Gemisches (8) nach einem der Ansprüche 8 - 13,
**dadurch gekennzeichnet, dass** das Übergangsstück (44) einen Metallring (32) aufweist.

15. Vorrichtung zum verbesserten Zünden eines Brennstoff/Luft Gemisches (8) nach einem der Ansprüche 8 - 14,
**dadurch gekennzeichnet, dass** wenigstens ein Teil der flexiblen Elektrode und wenigstens ein Teil der Zündelektrode (6) in einer gemeinsamen Metallhülse (30) angeordnet sind.

16. Brennkammer mit einer Vorrichtung zum verbesserten Zünden eines Brennstoff/Luft Gemisches (8) nach einem der vorhergehen Ansprüche.

17. Gasturbine mit einer Brennkammer nach Anspruch 16.
